# FASCICULE DE BREVET EUROPEEN

(11) **EP 0 948 177 B1**
(45) Date de publication et mention de la délivrance du brevet: **29.11.2006**
(21) Numéro de dépôt: 99400727.6
(22) Date de dépôt: 25.03.1999
(51) Int. Cl.: H04M 1/274

(54) **Terminal de communication à annuaire accessible depuis l'extérieur**
Kommunikationsterminal mit von aussen zugänglichem Verzeichnis
Communications terminal with externally accessible directory

(30) Priorité: 30.03.1998 FR 9803904
(43) Date de publication de la demande: 06.10.1999
(73) Titulaire: SAGEM Communication, 75015 Paris (FR)
(72) Inventeur: Khun, Alex, 95430 Auvers sur Oise (FR); Brot, Michel, 95100 Argenteuil (FR)
(74) Mandataire: Bloch, Gérard

(56) Documents cités:
- EP-A- 0 450 550
- EP-A- 0 823 809
- GB-A- 2 283 151
- GB-A- 2 313 736
- US-A- 5 283 820
- US-A- 5 465 401

## Description

De nombreux terminaux de communication comportent un annuaire pouvant contenir un très grand nombre de références telles que numéros de poste téléphonique ou de télécopieur, de poste de radiotéléphonie cellulaire ou encore de courrier électronique.

En pratique, un même utilisateur de plusieurs types de terminaux, tels que poste téléphonique et télécopieur, saisit au clavier des listes de références en annuaire sensiblement identiques dans chaque terminal, puisqu'un télécopieur et un poste téléphonique d'un correspondant peuvent se partager l'accès à une même ligne.

Ces saisies représentent une tâche fastidieuse qu'il faut répéter lorsqu'un annuaire est effacé lors d'une opération de maintenance.

La présente invention vise à réduire ce genre de tâche.

A cet effet, l'invention concerne un terminal de communication comportant des moyens pour accéder à des moyens mémoires d'annuaire et agencés pour permettre un transfert de l'annuaire entre le terminal et l'extérieur de celui-ci, caractérisé par le fait que les moyens d'accès comportent des circuits de liaison de données avec l'extérieur du terminal et de téléchargement de données d'annuaire depuis ou vers le réseau de télécommunication auquel le terminal est raccordé.

Le document GB-A-2 283 151 décrit un terminal de communication de ce type. Toutefois, ce terminal, qui utilise des mémoires additionnelles, ne peut exécuter de téléchargement, même d'un calculateur distant, car, dans ce cas, il agit comme une mémoire distante.

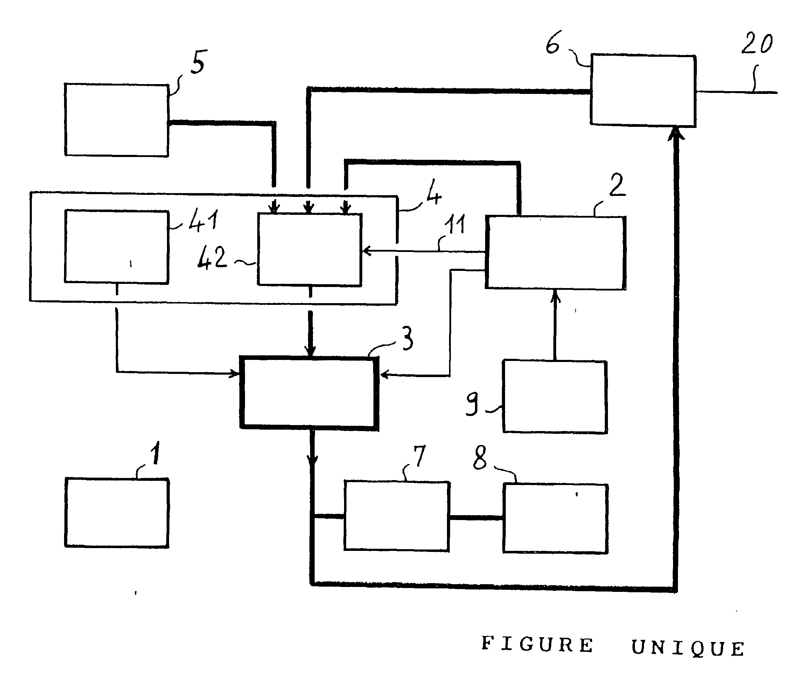

L'invention sera mieux comprise à l'aide de la description suivante d'une forme de réalisation préférée d'un terminal selon l'invention, en référence à la figure unique en annexe.

Le télécopieur représenté comporte une base de temps 1 rythmant le fonctionnement d'une unité centrale 2 à microprocesseur. Une mémoire annuaire 3 est gérée, en ce qui concerne l'écriture et la lecture, par des circuits 4. L'annuaire est accessible en écriture depuis un clavier 5 du télécopieur, à travers une première voie d'un multiplexeur 42 à trois voies des circuits 4, commandé, sur son entrée d'adresse, par l'unité centrale 2. Un circuit 6 d'interface avec le réseau téléphonique commuté, RTC, 20, est relié en sortie à la deuxième voie du multiplexeur 42 tandis que l'unité centrale 2 est reliée à la troisième voie. Les circuits 4 comportent en outre une logique 41 de gestion d'annuaire.

En lecture, une sortie de données de l'annuaire 3 est reliée à une entrée du circuit d'interface 6 et à un coupleur d'imprimante 7 commandant une imprimante 8.

Un lecteur optique 9, ou scanner, est relié en sortie à la troisième voie du multiplexeur 42 à travers l'unité centrale 2, qui dispose d'un logiciel de reconnaissance optique de caractères.

L'unité centrale 2 commande le fonctionnement de l'ensemble des circuits 3 à 9, par des liaisons non représentées.

Le fonctionnement du télécopieur va maintenant être expliqué.

Dans cet exemple, en ce qui concerne les problèmes de sauvegarde, l'annuaire 3 peut être chargé (multiplexeur 4) depuis trois sources de données :
- le clavier 5
- le lecteur optique 9
- un serveur/boîte aux lettres relié au RTC 20 et donc au circuit 6
et l'annuaire peut être lu par deux entités :
- l'imprimante 8
- le serveur ci-dessus, par le circuit 6.

### Saisie de l'annuaire 3 par le clavier 5

Dans cet exemple, on suppose que l'annuaire est initialement constitué par saisie à partir du clavier 5.

Sur le dessin, le clavier 5 a été représenté en liaison quasi-directe avec l'annuaire 3, dans un but de clarté.

En fait, l'unité centrale 2 est en tampon pour scruter les diverses touches du clavier 5, pour en recevoir des commandes et des données à mémoriser dans l'annuaire, après les avoir codées dans un format prévu.

Pour cette phase, l'utilisateur commande, par une touche du clavier 5, le passage en mode écriture de l'annuaire 3 depuis le clavier 5. L'unité centrale 2 commande alors le multiplexeur 42 pour mettre le clavier 5 en liaison avec l'entrée d'écriture de l'annuaire 3. Une liaison 11 commandant le mode écriture/lecture de l'annuaire 3 depuis l'unité centrale 2 alors mise à un état-logique correspondant à celui prévu pour l'écriture. A chaque activation de touche de lettre ou chiffre, le code ASCII correspondant est mémorisé dans l'annuaire 3 à une adresse spécifique d'octet. Pour cela, l'unité centrale 2 fait avancer, à chaque saisie, un compteur des circuits 41, qui balaye ainsi en écriture l'annuaire 3 en synchronisme avec les données à écrire, qui représentent par exemple des noms de correspondants avec leur numéro de téléphone, ou leur numéro INTERNET.

En exploitation, l'unité centrale 2 reçoit du clavier 5 des numéros courts, ou équivalents (noms), et elle adresse, d'après le numéro court, l'annuaire 3 pour afficher le numéro réel d'appel et/ou appeler directement le correspondant à travers l'interface RTC 6. Ceci est classique et ne sera donc pas détaillé ici.

Pour sauvegarder le contenu de l'annuaire 3, par commande depuis le clavier 5 par exemple, il est ici prévu, comme indiqué plus haut, deux possibilité pour la lire et en faire une copie, externe au télécopieur.

### Sauvegarde de l'annuaire 3 par l'imprimante 9

Le clavier 5 permet de commander, par l'unité centrale 2, un balayage complet de l'annuaire 3 et une impression ou édition de son contenu par l'imprimante 8. L'unité centrale 2 commande alors l'initialisation puis l'avance du compteur (41), après avoir fait passer la liaison 11 à l'état de mode lecture et commande ainsi une édition papier complète de l'annuaire 3 à travers le coupleur 7.

### Saisie par le lecteur 9

L'édition papier ci-dessus peut être saisie par reconnaissance optique au moyen du lecteur 9 et du logiciel de reconnaissance optique par le télécopieur représenté ou par tout autre terminal équipé de même. Là encore, cette phase est commandée depuis le clavier 5, c'est-à-dire qu'en particulier, la commande clavier spécifique correspondante commande l'aiguillage du fichier, constitué des caractères reconnus optiquement, vers l'annuaire 3. Ceci permet de différencier la lecture optique d'un document de télécopie, à émettre, par rapport à la lecture de l'édition papier de l'annuaire, à usage interne dans cette phase d'exploitation.

On va maintenant expliquer la sauvegarde de l'annuaire 3 dans une boîte aux lettres ou serveur relié au RTC 20, ou à tout autre réseau de transmission de données, et, symétriquement, le téléchargement de l'annuaire 3 depuis une telle boîte aux lettres.

### Sauvegarde de l'annuaire 3 par une boîte aux lettres

Le fonctionnement en lecture par balayage de l'annuaire 3 est semblable à ce qui a déjà été décrit pour l'imprimante. Ici, c'est l'interface 6 qui reçoit le contenu de l'annuaire 3 et qui le transfère à la boîte aux lettres, située dans cet exemple chez un fournisseur d'accès à l'INTERNET. Celui-ci a préalablement été appelé par une numérotation clavier commandant des circuits d'appel de l'interface 6.

### Téléchargement de l'annuaire 3 depuis la boîte aux lettres

Pour le téléchargement de l'annuaire 3 depuis la boîte aux lettres, celle-ci est appelée par numérotation clavier et l'unité centrale 2 commande la relève de la boîte. Les données ainsi lues dans celle-ci traversent l'interface 6 et le multiplexeur 42, adressé en conséquence, l'annuaire étant alors en mode écriture (11). Là encore, l'unité centrale 2 est en fait en tampon pour gérer le protocole de lecture de la boîte aux lettres et mettre les données d'annuaire dans un format prévu pour l'annuaire 3.

On conçoit que, hormis le clavier 5 classique de saisie d'annuaire, le télécopieur aurait pu n'avoir qu'un nombre restreint des quatre moyens, de saisie 6, 9 et de sauvegarde 6, 8 d'annuaire, et en particulier ne comporter qu'un seul de ces quatre moyens, c'est-à-dire ne permettre que la saisie en provenance de l'extérieur du terminal ou bien la sauvegarde par transfert à l'extérieur du terminal.

Dans une autre forme de réalisation, non représentée, il peut être prévu que l'annuaire soit amovible et- en particulier porté par une carte à puce associée à un lecteur du terminal.

On peut alors accéder, depuis l'extérieur du terminal, à l'annuaire amovible pour le lire dans un équipement externe et le sauvegarder dans cet équipement ou le transférer à une boîte aux lettres. L'accès est alors un accès physique au moyen matériel 3 mémorisant l'annuaire, pour le mettre en place ou l'extraire du terminal, et non plus un simple accès, logique, aux données qu'il contient. Le moyen matériel de mémorisation de l'annuaire est alors facilement démontable et par exemple monté sur un connecteur, ou lecteur de carte à puce, et l'agencement mécanique du terminal est prévu pour permettre la localisation et la saisie de ce moyen 3 par des opérations simples, ne nécessitant, de préférence, pas d'outil.

Inversement, on peut implanter dans le terminal une mémoire dont l'annuaire a été préalablement chargé à l'extérieur du terminal, dans un appareil outil de charge locale ou de téléchargement de l'annuaire.

Dans l'une et l'autre des formes de réalisation, le fait de disposer d'un accès en lecture à l'annuaire permet de le sauvegarder pour constituer une base de données que pourra ensuite utiliser un ou plusieurs terminaux pour charger ou télécharger leur mémoire (3) destinée à contenir les données d'annuaire.

## Revendications

1. Terminal de communication comportant des moyens (6, 7, 8, 9) pour accéder à des moyens mémoires d'annuaire (3) et agencés pour permettre un transfert de l'annuaire entre le terminal et l'extérieur de celui-ci, **caractérisé par le fait que** les moyens d'accès comportent des circuits (6, 7, 9) de liaison de données avec l'extérieur du terminal et de téléchargement de données d'annuaire depuis ou vers un réseau de télécommunication auquel le terminal est raccordé.

2. - Terminal selon la revendication 1, dans lequel il est prévu des moyens séquenceurs (2) agencés pour commander un balayage de l'annuaire (3) par des moyens d'adressage (41) et pour échanger les données avec les circuits de liaison (6, 7).

3. - Terminal selon l'une des revendications 1 et 2, dans lequel les moyens mémoires (3) sont amovibles et accessibles de façon à pouvoir être extraits du terminal.

4. - Terminal selon l'une des revendications 1 à 3, dans lequel les circuits de liaison (6) sont agencés pour établir une liaison de données avec un serveur d'un réseau de transmission de données (20).

5. Terminal selon l'une des revendications 1 à 4, dans lequel les circuits de liaison (6) sont agencés pour appeler une boîte aux lettres et échanger avec elle des données d'annuaire (3).

6. - Terminal selon l'une des revendications 1 à 5, dans lequel les circuits de liaison (7) sont agencés pour commander une imprimante (8) d'édition du contenu de l'annuaire (3).

7. - Terminal selon l'une des revendications 1 à 6, dans lequel l'annuaire est porté par une carte à puce.

8. - Terminal selon la revendication 7, dans lequel la carte à puce est une carte pour poste de radiotéléphonie cellulaire.

## Claims

1. Communication terminal comprising means (6, 7, 8, 9) for accessing directory memory means (3) and arrange to allow transfer of the directory between the terminal and the outside thereof, **characterised by** the fact that the access means comprise circuits (6, 7, 9) for data connection with the outside of the terminal and downloading directory data from or to a communication network to which the terminal is connected.

2. Terminal according to claim 1, in which sequencing means (2) are provided, arranged to control a scanning of the directory (3) by addressing means (41) and to exchange the data with the connection circuits (6,7).

3. Terminal according to one of claims 1 and 2, in which the memory means (3) are removable and accessible so as to be able to be extracted from the terminal.

4. Terminal according to one of claims 1 to 3, in which the connection circuits (6) are arranged so as to establish a data connection with a server of a data transmission network (20).

5. Terminal according to one of claims 1 to 4, in which the connection circuits (6) are arranged for calling a mailbox and exchanging directory data (3) with it.

6. Terminal according one of claims 1 to 5, in which the connection circuits (7) are arranged to control a printer (8) for editing the content of the directory (3).

7. Terminal according to one of claims 1 to 6, in which the directory is carried by a chip card.

8. Terminal according to claim 7, in which the chip card is a card for a cellular telephone.

## Patentansprüche

1. Kommunikationsendgerät, mit Einrichtungen (6, 7, 8, 9) zum Zugriff auf Rufnummernverzeichnisspeichereinrichtungen (3), und die dazu ausgelegt sind, eine Übertragung des Rufnummernverzeichnisses zwischen dem Endgerät und dessen Außenumgebung zu ermöglichen, **dadurch gekennzeichnet, dass** die Zugriffseinrichtungen Schaltungen (6, 7, 9) zur Datenverbindung mit der Außenumgebung des Endgeräts und zum Herunterladen von Rufnummernverzeichnisdaten von oder zu einem Telekommunikationsnetz umfassen, an welches das Endgerät angeschlossen ist.

2. Endgerät nach Anspruch 1, bei dem Befehlsgebereinrichtungen (2) vorgesehen sind, die dazu eingerichtet sind, eine Abtastung des Rufnummernverzeichnisses (3) durch Adressierungseinrichtungen (41) zu steuern, und die Daten mit den Verbindungsschaltungen (6, 7) auszutauschen.

3. Endgerät nach einem der Ansprüche 1 und 2, bei dem die Speichereinrichtungen (3) herausnehmbar und zugänglich sind, um aus dem Endgerät entnommen werden zu können.

4. Endgerät nach einem der Ansprüche 1 bis 3, bei dem die Verbindungsschaltungen (6) dazu eingerichtet sind, eine Datenverbindung mit einem Server eines Datenübertragungsnetzes (20) herzustellen.

5. Endgerät nach einem der Ansprüche 1 bis 4, bei dem die Verbindungsschaltungen (6) dazu eingerichtet sind, eine Mailbox aufzurufen und mit ihr Rufnummernverzeichnisdaten (3) auszutauschen.

6. Endgerät nach einem der Ansprüche 1 bis 5, bei dem die Verbindungsschaltungen (7) dazu eingerichtet sind, einen Drucker (8) zur Ausgabe des Inhalts des Rufnummernverzeichnisses (3) anzusteuern.

7. Endgerät nach einem der Ansprüche 1 bis 6, bei dem das Rufnummernverzeichnis in einer Chip-Karte enthalten ist.

8. Endgerät nach Anspruch 7, bei dem die Chip-Karte eine Karte für ein Zellenfunknetz-Gerät ist.
